# EUROPEAN PATENT APPLICATION

(11) **EP 4 661 253 A1**
(43) Date of publication of application: **10.12.2025**
(21) Application number: 24749859.5
(22) Date of filing: 04.01.2024
(51) Int. Cl.: H02J 50/90, B60L 5/00, B60L 53/38, B60L 53/126, B60M 7/00, H02J 7/00, H02J 50/12, H02J 50/40, H02J 50/80

(54) **WIRELESS POWER TRANSMISSION SYSTEM**

(30) Priority: 31.01.2023 JP 2023013218
(71) Applicant: TOYOTA JIDOSHA KABUSHIKI KAISHA, Toyota-shi Aichi 471-8571 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP)
(74) Representative: Cabinet Beau de Loménie
(86) International application number: PCT/JP2024/000019
(87) International publication number: WO 2024/161903

(57) **Abstract**

A wireless power transfer system according to the present invention is a wireless power transfer system that performs wireless power transfer by magnetic coupling between a supply device on a ground side and a traveling vehicle, the wireless power transfer system including a control device that controls the wireless power transfer from a power transmission unit of the supply device to a power reception unit of the vehicle, in which the control device sets a time of alignment check to be longer than a time of pairing.

## Description

### Field

The present invention relates to a wireless power transfer system.

### Background

Patent Literature 1 discloses a travel assistance system that provides, from a server to a traveling vehicle, travel assistance information for improving charge efficiency when power is contactlessly transferred from a supply device of a travel lane to the traveling vehicle. The travel support information includes a travel position and a vehicle speed of a vehicle satisfying a condition that the charge efficiency is equal to or greater than a predetermined value.

### Citation List

### Patent Literature

Patent Literature 1: Japanese Laid-open Patent Publication No. 2015-228047

### Summary

### Technical Problem

Note that, in a system that transfers power from a supply device on a ground side to a traveling vehicle contactlessly, communication (narrow-area wireless communication) between the vehicle and the supply device on the ground side is performed separately from communication (wide-area wireless communication) between a server and the vehicle. The supply device on the ground side pairs with the vehicle and detects a lateral position of the traveling vehicle on the basis of a signal received from the vehicle using the narrow-area wireless communication.

However, as for control on the ground side using the narrow-area wireless communication, pairing can be performed by one reception antenna, whereas detection of the lateral position is performed on the basis of a radio field intensity difference among a plurality of reception antennas. Since the detection of the lateral position requires more time for processing than pairing, there is room for improvement in order to accurately determine lateral positional displacement of the vehicle in the supply device on the ground side.

The present invention is achieved in consideration of the above-described circumstances, and an object thereof is to provide a wireless power transfer system capable of accurately determining lateral positional displacement of a vehicle in a supply device on a ground side.

### Solution to Problem

A wireless power transfer system according to the present invention that performs wireless power transfer by magnetic coupling between a supply device on a ground side and a vehicle in motion, includes a control device that controls the wireless power transfer from a power transmission unit of the supply device to a power reception unit of the vehicle. Further, the control device sets a time of Alignment check to be longer than a time of Pairing.

According to this configuration, since a time of alignment check can be set longer than a time of pairing, a lateral positional displacement of a vehicle can be accurately determined.

The control device may determine that it is Alignment loss in a case of determining that the vehicle is displaced in a lateral direction to such an extent that an amount of lateral positional displacement of the vehicle cannot be detected, and may remain in a state of Alignment check when determining that it is the Alignment loss and an elapsed time is equal to or shorter than a first predetermined time.

According to this configuration, when the lateral positional displacement of the vehicle is eliminated, wireless power transfer can be performed immediately.

The control device may transit, in a case of determining that a time of a state of the Alignment loss exceeds the first predetermined time, a state from the Alignment check to the Pairing, and transit, in a case of determining that the time of the state of the Alignment loss exceeds a second predetermined time which is longer than the first predetermined time, the state from the Alignment check to Compatibility check.

According to this configuration, by transitioning from alignment check to compatibility check, it is possible to safely resume charging after compatibility can be confirmed.

The control device may not correct a traveling position while remaining in the state of the Alignment check.

According to this configuration, unnecessary correction can be prevented while remaining in alignment check.

The control device may transmit in a case where the time of the state of the Alignment loss exceeds the first predetermined time, information indicating that the positional displacement of the vehicle occurs to a control unit that performs Fine positioning, and the control unit that performs the Fine positioning may correct the positional displacement of the vehicle.

According to this configuration, a control unit that performs fine positioning corrects the positional displacement of the vehicle, thereby eliminating alignment loss.

### Advantageous Effects of Invention

In the present invention, since a time of alignment check can be set longer than a time of pairing, a lateral positional displacement of a vehicle can be accurately determined.

### Brief Description of Drawings

FIG. 1 is a schematic diagram illustrating a wireless power transfer system in an embodiment.
FIG. 2 is a diagram illustrating an entire configuration of the wireless power transfer system.
FIG. 3 is a schematic diagram for describing wide-area wireless communication in the wireless power transfer system.
FIG. 4 is a block diagram illustrating a functional configuration of a power transmission ECU.
FIG. 5 is a block diagram illustrating a functional configuration of a vehicle ECU.
FIG. 6 is a diagram for describing a power transfer process.
FIG. 7 is a sequence diagram illustrating a case where communication using the wide-area wireless communication is performed between a vehicle and a supply device.
FIG. 8 is a sequence diagram illustrating an operation after power feed from the supply device to the vehicle during traveling is terminated.
FIG. 9 is a diagram illustrating an example of the power transfer process.
FIG. 10 is a flowchart illustrating control during alignment check.

### Description of Embodiments

A wireless power transfer system in an embodiment of the present invention is hereinafter specifically described. The present invention is not limited to the embodiment described below.

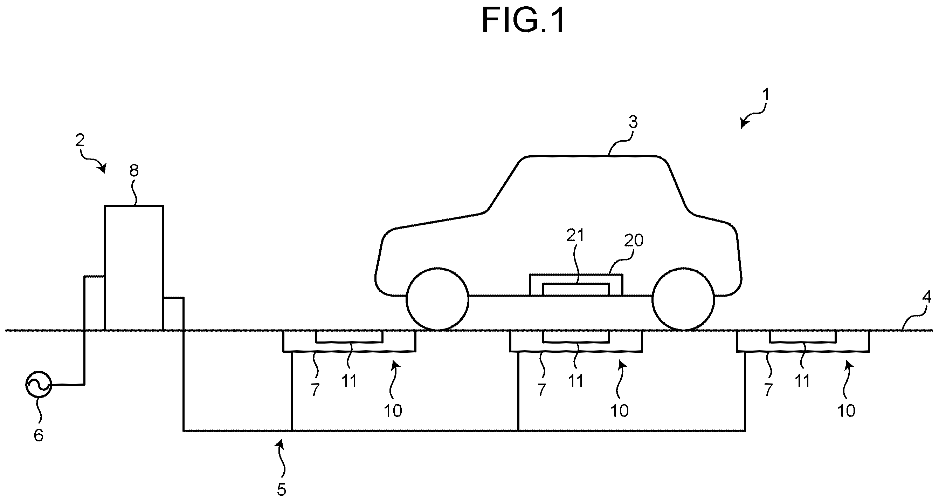

FIG. 1 is a schematic diagram illustrating a wireless power transfer system in the embodiment. A wireless power transfer system 1 includes a supply facility 2 and a vehicle 3. The supply facility 2 is a facility that supplies power to the traveling vehicle 3 contactlessly. The vehicle 3 is an electric vehicle that can be charged with power supplied from an external power supply, and is, for example, a battery electric vehicle (BEV), a plug-in hybrid electric vehicle (PHEV) or the like.

The wireless power transfer system 1 performs wireless power transfer from the supply facility 2 to the vehicle 3 by magnetic field resonance coupling (magnetic field resonance). The wireless power transfer system 1 transfers power from the supply facility 2 to the vehicle 3 traveling on a road 4 contactlessly. That is, the wireless power transfer system 1 transfers power by a magnetic field resonance system, and implements power feed to the vehicle 3 during traveling using magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The supply facility 2 includes a supply device 5 and an AC power supply 6 that supplies power to the supply device 5. The supply device 5 transfers the power supplied from the AC power supply 6 to the vehicle 3 contactlessly. The AC power supply 6 is, for example, a commercial power supply. The supply device 5 includes a power transmission device 10 including a primary coil 11.

The supply device 5 includes a segment 7 including the primary coil 11 and a management device 8 that manages the segment 7. The segment 7 is embedded in a lane of the road 4. The management device 8 is installed beside the road 4. The segment 7 is electrically connected to the management device 8. The management device 8 is electrically connected to the AC power supply 6, and supplies the power of the AC power supply 6 to the segment 7. The segment 7 is electrically connected to the AC power supply 6 via the management device 8. A plurality of segments 7 can be arranged along the lane of the road 4. For example, as illustrated in FIG. 1, the supply device 5 includes three segments 7 installed side by side along the lane in the road 4, and one management device 8 to which the three segments 7 are connected. The segment 7 has a function of transferring power from the supply device 5 to the vehicle 3 contactlessly. The management device 8 has a function of controlling wireless power transfer in the segment 7.

The vehicle 3 includes a power reception device 20 including a secondary coil 21. The power reception device 20 is provided at the bottom of a vehicle body of the vehicle 3. When the vehicle 3 travels on the road 4 on which the primary coil 11 is installed, the primary coil 11 on a ground side and the secondary coil 21 on a vehicle side face each other in a vertical direction. The wireless power transfer system 1 transfers power from the primary coil 11 of the power transmission device 10 to the secondary coil 21 of the power reception device 20 contactlessly while the vehicle 3 is traveling on the road 4.

In this description, traveling means a state in which the vehicle 3 is located on the road 4 for traveling. Traveling includes a state in which the vehicle 3 temporarily stops on the road 4. For example, a state in which the vehicle 3 stops on the road 4 due to traffic light waiting or the like is also included in traveling. In contrast, even in a state in which the vehicle 3 is located on the road 4, for example, a case where the vehicle 3 parks or stops is not included in traveling.

In this description, a lane in which the primary coil 11 (segment 7) is embedded might be referred to as a D-WPT lane, and a place that is a partial section of the road 4 where wireless power transfer by the supply device 5 can be performed might be referred to as a D-WPT charging site. In the D-WPT lane and the D-WPT charging site, a plurality of primary coils 11 (a plurality of segments 7) is installed side by side in a travel direction of the vehicle 3 over a predetermined section of the road 4.

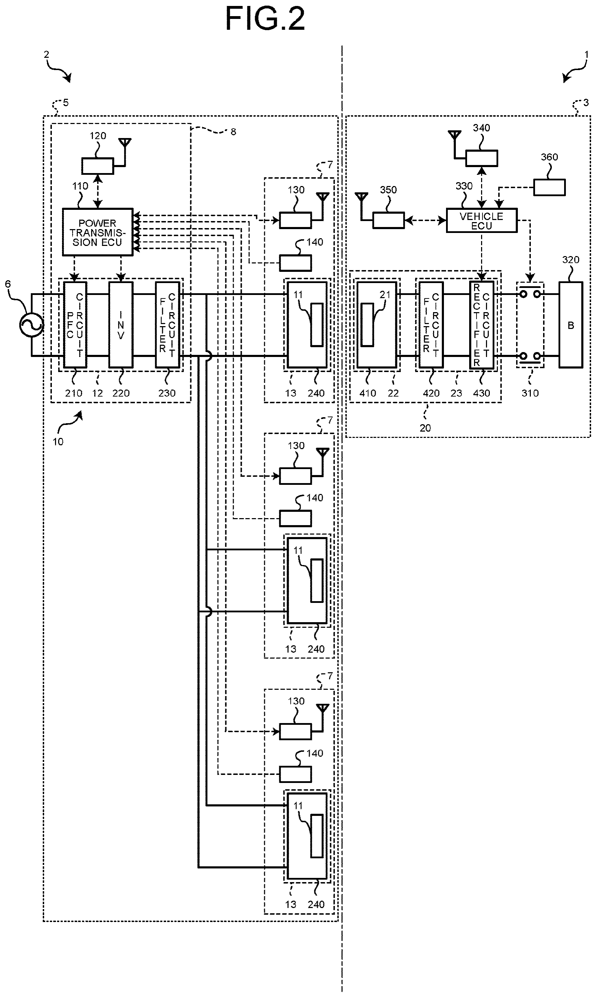

FIG. 2 is a diagram illustrating an entire configuration of the wireless power transfer system. In the supply facility 2, the supply device 5 is electrically connected to the AC power supply 6. In the supply device 5, the segment 7 is electrically connected to the management device 8.

The supply device 5 includes a configuration provided in the management device 8 and a configuration provided in the segment 7. The supply device 5 includes the power transmission device 10, a power transmission electronic control unit (ECU) 110, a first communication device 120, a second communication device 130, and a foreign object detection device 140.

The power transmission device 10 includes an electric circuit connected to the AC power supply 6. The power transmission device 10 includes a power factor collection (PFC) circuit 210, an inverter (INV) 220, a filter circuit 230, and a power transmission-side resonance circuit 240.

The PFC circuit 210 improves a power factor of the AC power input from the AC power supply 6, converts the AC power into DC power, and outputs the DC power to the inverter 220. The PFC circuit 210 includes an AC/DC converter. The PFC circuit 210 is electrically connected to the AC power supply 6.

The inverter 220 converts the DC power input from the PFC circuit 210 into AC power. Each switching element of the inverter 220 includes an insulated gate bipolar transistor (IGBT), a metal-oxide-semiconductor field effect transistor (MOSFET) or the like, and performs a switching operation according to a control signal from the power transmission ECU 110. For example, a driving frequency of the inverter 220 is 85 kHz. The inverter 220 outputs the converted AC power to the filter circuit 230.

The filter circuit 230 removes noise included in an AC current input from the inverter 220, and supplies the AC power from which the noise is removed to the power transmission-side resonance circuit 240. The filter circuit 230 is an LC filter obtained by combining a coil and a capacitor. For example, the filter circuit 230 includes a T-type filter in which two coils and one capacitor are arranged in a T-shape. The PFC circuit 210, the inverter 220, and the filter circuit 230 form a power conversion unit 12 of the power transmission device 10.

The power transmission-side resonance circuit 240 is a power transmission unit that transfers the AC power supplied from the filter circuit 230 to the power reception device 20 contactlessly. When the AC power is supplied from the filter circuit 230 to the power transmission-side resonance circuit 240, a current flows through the primary coil 11, and a magnetic field for power transmission is generated.

The power transmission-side resonance circuit 240 includes the primary coil 11 and a resonance capacitor. The primary coil 11 is a power transmission coil. The resonance capacitor is connected in series to one end of the primary coil 11, and adjusts a resonance frequency of the power transmission-side resonance circuit. The resonance frequency is 10 kHz to 100 GHz, preferably 85 kHz. For example, the power transmission device 10 is configured in such a manner that the resonance frequency of the power transmission-side resonance circuit 240 and the driving frequency of the inverter 220 coincide with each other. The power transmission-side resonance circuit 240 forms a primary device 13 of the power transmission device 10.

The power transmission device 10 includes the power conversion unit 12 and the primary device 13. The power conversion unit 12 includes the PFC circuit 210, the inverter 220, and the filter circuit 230. The primary device 13 includes the power transmission-side resonance circuit 240. The power transmission device 10 has a configuration in which the power conversion unit 12 is provided in the management device 8 and the primary device 13 is provided in the segment 7.

In the supply device 5, the power conversion unit 12 of the power transmission device 10, the power transmission ECU 110, and the first communication device 120 are provided in the management device 8, and the primary device 13 of the power transmission device 10, the second communication device 130, and the foreign object detection device 140 are provided in the segment 7.

The power transmission ECU 110 is an electronic control device that controls the supply device 5. The power transmission ECU 110 includes a processor and a memory. The processor includes a central processing unit (CPU), a digital signal processor (DSP), a fieldprogrammable gate array (FPGA) and the like. The memory is a main storage device, and includes a random access memory (RAM), a read only memory (ROM) and the like. The power transmission ECU 110 loads a program stored in a storage unit into a work area of the memory (main storage device) and executes the program, and controls each component and the like through execution of the program, thereby implementing a function matching a predetermined purpose. The storage unit includes a recording medium such as an erasable programmable ROM (EPROM), a hard disk drive (HDD), and a removable medium. Examples of the removable medium include a disk recording medium such as a universal serial bus (USB) memory, a compact disc (CD), a digital versatile disc (DVD), and a Blu-ray (registered trademark) disc (BD). The storage unit can store an operating system (OS), various programs, various tables, various databases and the like. Signals from various sensors are input to the power transmission ECU 110. Signals from the foreign object detection device 140 are input to the power transmission ECU 110. Then, the power transmission ECU 110 executes various types of control on the basis of the signals input from the various sensors.

For example, the power transmission ECU 110 executes power control for adjusting power for power transmission. In the power control, the power transmission ECU 110 controls the power transmission device 10. The power transmission ECU 110 outputs a control signal to the power conversion unit 12 in order to control the power supplied from the power conversion unit 12 to the primary device 13. The power transmission ECU 110 controls the switching elements included in the PFC circuit 210 to adjust power for power transmission, and controls the switching elements included in the inverter 220 to adjust power for power transmission.

The power transmission ECU 110 executes communication control for controlling communication with the vehicle 3. In the communication control, the power transmission ECU 110 controls the first communication device 120 and the second communication device 130.

The first communication device 120 is the communication device on the ground side that performs wide-area wireless communication. The first communication device 120 performs wireless communication with the vehicle 3 before approaching the WPT lane among the vehicles 3 traveling on the road 4. The state before approaching the WPT lane means that the vehicle 3 is at a position at which narrow-area wireless communication with the supply device 5 cannot be performed.

The wide-area wireless communication is communication at a communication distance of 10 meters to 10 kilometers. The wide-area wireless communication is communication at a longer communication distance than that of the narrow-area wireless communication. As the wide-area wireless communication, various types of wireless communication at a long communication distance can be used. For example, communication conforming to communication standards such as 3GPP (registered trademark), 4G formulated by IEEE, LTE, 5G, and WiMAX is used for the wide-area wireless communication. In the wireless power transfer system 1, vehicle information associated with vehicle identification information (vehicle ID) is transmitted from the vehicle 3 to the supply device 5 using the wide-area wireless communication.

The second communication device 130 is the communication device on the ground side that performs narrow-area wireless communication. The second communication device 130 performs wireless communication with the vehicle 3 that approaches or enters the WPT lane among the vehicles 3 traveling on the road 4. The state of approaching the WPT lane means that the vehicle 3 is at a position at which the narrow-area wireless communication with the supply device 5 can be performed.

The narrow-area wireless communication is communication at a communication distance shorter than 10 meters. The narrow-area wireless communication is communication at a shorter communication distance than that of the wide-area wireless communication. As the narrow-area wireless communication, various types of short-range wireless communication at a short communication distance can be used. For example, communication conforming to optional communication standards formulated by IEEE, ISO, IEC and the like is used for the narrow-area wireless communication. As an example, Wi-Fi (registered trademark), Bluetooth (registered trademark), ZigBee (registered trademark) and the like are used for the narrow-area wireless communication. Alternatively, as a technology for performing the narrow-area wireless communication, radio frequency identification (RFID), dedicated short range communication (DSRC) and the like may be used. In the wireless power transfer system 1, the vehicle identification information and the like is transmitted from the vehicle 3 to the supply device 5 using the narrow-area wireless communication.

The foreign object detection device 140 detects a metal foreign object, a living object and the like present above the primary coil 11. The foreign object detection device 140 includes, for example, a sensor coil installed on the ground, an imaging device and the like. The foreign object detection device 140 exerts a foreign object detection (FOD) function and a living object protection (LOP) function in the wireless power transfer system 1.

In the supply device 5, the configuration of the power transmission device 10 is arranged separately in the segment 7 and the management device 8, and the three segments 7 are connected to one management device 8. The power transmission device 10 is configured in such a manner that one inverter supplies power to three power transmission-side resonance circuits 240. In the supply device 5, a signal from each segment 7 is input to the management device 8. Signals from the second communication device 130 and the foreign object detection device 140 provided in the first segment are input to the power transmission ECU 110. Similarly, signals from the second communication device 130 and the foreign object detection device 140 provided in the second segment are input to the power transmission ECU 110. Signals from the second communication device 130 and the foreign object detection device 140 provided in the third segment are input to the power transmission ECU 110. The power transmission ECU 110 can grasp a state of each segment 7 on the basis of the signal input from each segment 7.

The vehicle 3 includes the power reception device 20, a charge relay 310, a battery 320, a vehicle ECU 330, a third communication device 340, a fourth communication device 350, and a global positioning system (GPS) receiver 360.

The power reception device 20 supplies the power received from the power transmission device 10 to the battery 320. The power reception device 20 is electrically connected to the battery 320 via the charge relay 310. The power reception device 20 includes a power reception-side resonance circuit 410, a filter circuit 420, and a rectifier circuit 430.

The power reception-side resonance circuit 410 is a power reception unit that receives power transferred from the power transmission device 10 contactlessly. The power reception-side resonance circuit 410 includes a power reception-side resonance circuit including the secondary coil 21 and a resonance capacitor. The secondary coil 21 is a power reception coil that receives the power transferred from the primary coil 11 contactlessly. The resonance capacitor is connected in series to one end of the secondary coil 21, and adjusts a resonance frequency of the power reception-side resonance circuit 410. The resonance frequency of the power reception-side resonance circuit 410 is determined to coincide with the resonance frequency of the power transmission-side resonance circuit 240.

The resonance frequency of the power reception-side resonance circuit 410 is the same as the resonance frequency of the power transmission-side resonance circuit 240. Therefore, when a magnetic field is generated by the power transmission-side resonance circuit 240 in a state in which the power reception-side resonance circuit 410 faces the power transmission-side resonance circuit 240, vibration of the magnetic field is transmitted to the power reception-side resonance circuit 410. The primary coil 11 and the secondary coil 21 are brought into a resonance state. When an induced current flows through the secondary coil 21 by electromagnetic induction, an induced electromotive force is generated in the power reception-side resonance circuit 410. In this manner, the power reception-side resonance circuit 410 receives the power transferred from the power transmission-side resonance circuit 240 contactlessly. Then, the power reception-side resonance circuit 410 supplies the power received from power transmission-side resonance circuit 240 to the filter circuit 420. The power reception-side resonance circuit 410 forms a secondary device 22 of the power reception device 20.

The filter circuit 420 removes noise included in an AC current input from the power reception-side resonance circuit 410, and supplies the AC power from which the noise is removed to the rectifier circuit 430. The filter circuit 420 is an LC filter obtained by combining a coil and a capacitor. For example, the filter circuit 420 includes a T-type filter in which two coils and one capacitor are arranged in a T-shape.

The rectifier circuit 430 converts the AC power input from the filter circuit 420 into DC power and outputs the DC power to the battery 320. The rectifier circuit 430 includes, for example, a full-bridge circuit in which four diodes are full-bridge connected as rectifier elements. A switching element is connected in parallel to each diode of the rectifier circuit 430. Each switching element of the rectifier circuit 430 is formed of an IGBT, and performs a switching operation according to a control signal from the vehicle ECU 330. The rectifier circuit 430 supplies the converted DC power to the battery 320. The filter circuit 420 and the rectifier circuit 430 form a power conversion unit 23 of the power reception device 20.

The power reception device 20 includes the secondary device 22 and the power conversion unit 23. The secondary device 22 includes the power reception-side resonance circuit 410. The power conversion unit 23 includes the filter circuit 420 and the rectifier circuit 430.

The charge relay 310 is provided between the rectifier circuit 430 and the battery 320. An open/close state of the charge relay 310 is controlled by the vehicle ECU 330. The charge relay 310 is controlled to be in a closed state when the battery 320 is charged by the power transmission device 10. In a case where the charge relay 310 is in the closed state, the rectifier circuit 430 and the battery 320 are connected so as to be energizable. In a case where the charge relay 310 is in an open state, the rectifier circuit 430 and the battery 320 are disconnected so as not to be energizable. For example, in a case where the charge relay 310 is in the open state, the vehicle 3 does not require power feed.

The battery 320 is a DC power supply that can be charged, and includes, for example, a lithium-ion battery, a nickel hydrogen battery and the like. The battery 320 stores the power supplied from the power transmission device 10 to the power reception device 20. The battery 320 can supply power to a traveling motor of the vehicle 3. The battery 320 is electrically connected to the traveling motor via a power control unit (PCU). The PCU is a power conversion device that converts the DC power of the battery 320 into AC power and supplies the AC power to the traveling motor. Each switching element of the PCU is formed of an IGBT, and performs a switching operation according to a control signal from the vehicle ECU 330.

The vehicle ECU 330 is an electronic control device that controls the vehicle 3. The vehicle ECU 330 has a hardware configuration similar to that of the power transmission ECU 110. Signals from various sensors mounted on the vehicle 3 are input to the vehicle ECU 330. A positioning signal received by the GPS receiver 360 is input to the vehicle ECU 330. The vehicle ECU 330 can acquire current position information of the vehicle 3 from the GPS receiver 360. Then, the vehicle ECU 330 executes various types of control on the basis of the signals input from the various sensors.

For example, the vehicle ECU 330 executes contactless charge control to transfer power from the primary coil 11 to the secondary coil 21 contactlessly, and store the power received by the secondary coil 21 in the battery 320. In the contactless charge control, the vehicle ECU 330 controls the rectifier circuit 430, the charge relay 310, the third communication device 340, and the fourth communication device 350. The contactless charge control includes power control for controlling charging power and communication control for controlling communication with the supply device 5. In the power control, the vehicle ECU 330 controls the switching element included in the rectifier circuit 430 to adjust power (charging power) supplied from the power reception device 20 to the battery 320. In the communication control, the vehicle ECU 330 controls the third communication device 340 and the fourth communication device 350.

The third communication device 340 is the communication device on a vehicle side that performs the wide-area wireless communication. The third communication device 340 performs wireless communication with the first communication device 120 of the supply device 5 in a state before the vehicle 3 traveling on the road 4 approaches the WPT lane. The wide-area wireless communication is bidirectional wireless communication. Communication between the first communication device 120 and the third communication device 340 is performed by high-speed wireless communication.

The fourth communication device 350 is the communication device on the vehicle side that performs the narrow-area wireless communication. The fourth communication device 350 performs wireless communication with the second communication device 130 of the supply device 5 in a state in which the vehicle 3 approaches or enters the WPT lane. The narrow-area wireless communication is unidirectional wireless signaling. The unidirectional wireless signaling is point to point signaling (P2PS). The P2PS is used to notify the supply device 5 of the vehicle identification information from the vehicle 3 in each activity of pairing, alignment check, magnetic coupling check, perform power transfer, and power transfer terminated. The P2PS can be used as a means of alignment check in a lateral direction. The lateral direction is a width direction of the lane and is a width direction of the vehicle 3.

The GPS receiver 360 detects a current position of the vehicle 3 on the basis of positioning information obtained from a plurality of positioning satellites. The current position information of the vehicle 3 detected by the GPS receiver 360 is transmitted to the vehicle ECU 330.

In the supply device 5, the filter circuit 230 may be included not in the segment 7 but in the management device 8. That is, the filter circuit 230 may be installed beside the road 4. In this case, the power conversion unit 12 includes the PFC circuit 210, the inverter 220, and the filter circuit 230, and the primary device 13 includes the power transmission-side resonance circuit 240.

The filter circuit 230 may be provided for each primary coil 11, or may be provided collectively for a plurality of primary coils 11.

The filter circuit 230 is not limited to the T-type filter, and may be, for example, a band pass filter in which the coil and the capacitor are connected in series. This is similar in the filter circuit 420 of the vehicle 3.

In the power transmission device 10, a changeover switch for switching the primary coil 11 to be energized when the inverter 220 is connected to a plurality of primary coils 11 may be provided in each primary device 13. The changeover switch may be provided in the management device 8 beside the road 4 or may be provided near the primary coil 11.

The power transmission-side resonance circuit 240 is not limited to the configuration in which the primary coil 11 and the resonance capacitor are connected in series. The primary coil 11 and the resonance capacitor may be connected in parallel, or parallel connection and serial connection may be combined. In short, the power transmission-side resonance circuit 240 only needs to be configured in such a manner that the resonance frequency of the power transmission-side resonance circuit 240 coincides with the driving frequency of the inverter 220, and a connection relationship of the components is not particularly limited. This is similar in the power reception-side resonance circuit 410 of the vehicle 3.

The driving frequency of the inverter 220 is not limited to 85 kHz, and may be a frequency around 85 kHz. In short, the driving frequency of the inverter 220 may be a predetermined frequency band including 85 kHz.

The power transmission device 10 may have a configuration in which a plurality of inverters 220 is connected to an output-side power line (DC power line) of the PFC circuit 210.

The foreign object detection device 140 may be provided not only on the ground side but also on the vehicle 3 side. For example, it is possible to configure that, in a case where the foreign object detection device on the vehicle 3 side detects a foreign object, a living object and the like present above the primary coil 11, a power feed request is stopped until the vehicle 3 passes through the primary coil 11.

In the wireless power transfer system 1, information transmitted from the vehicle 3 to the supply device 5 using the narrow-area wireless communication includes the power feed request, a feed power request value and the like in addition to the vehicle identification information. The power feed request is information indicating that power transfer from the primary coil 11 is requested. The feed power request value is a request value of an amount of power transferred from the supply device 5 to the vehicle 3. The vehicle ECU 330 can calculate the feed power request value on the basis of SOC of the battery 320.

The wireless power transfer system 1 can implement not only a method of feeding power from the ground to the vehicle 3 but also a method of feeding power from the vehicle 3 to the ground. In this case, the rectifier circuit 430 can be replaced with an inverter to implement rectification at the time of power supply and power reception.

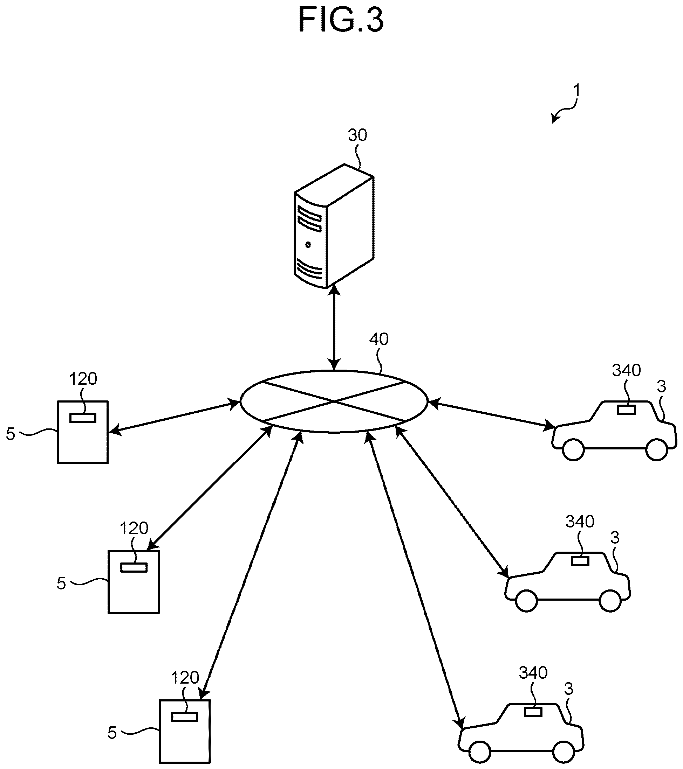

FIG. 3 is a schematic diagram for describing the wide-area wireless communication in the wireless power transfer system.

In the wireless power transfer system 1, the vehicle 3 can communicate with a server 30, and the supply device 5 can communicate with the server 30. The server 30 is connected to a network 40 and can communicate with a plurality of vehicles 3 and a plurality of supply devices 5 via the network 40. The network 40 includes a wide area network (WAN), which is a public communication network such as the Internet, a telephone communication network of a mobile phone and the like.

The vehicle 3 is connected to the network 40 by the wide-area wireless communication using the third communication device 340. The vehicle 3 transmits information to the server 30 and receives information from the server 30.

The supply device 5 is connected to the network 40 by the wide-area wireless communication using the first communication device 120. The supply device 5 transmits information to the server 30 and receives information from the server 30.

The server 30 processes information regarding the wireless power transfer between the vehicle 3 and the supply device 5. The server 30 includes a communication device and a control device. The control device has a hardware configuration similar to that of the power transmission ECU 110. The server 30 creates various lists regarding the wireless power transfer on the basis of the information received from the vehicle 3 and the information received from the supply device 5. Then, the server 30 provides necessary information regarding the wireless power transfer to the necessary vehicle 3 and supply device 5 at necessary timing on the basis of the various lists.

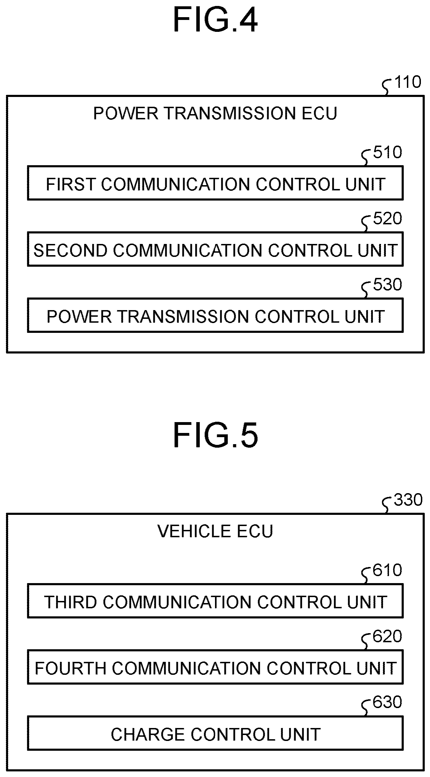

FIG. 4 is a block diagram illustrating a functional configuration of the power transmission ECU. The power transmission ECU 110 includes a first communication control unit 510, a second communication control unit 520, and a power transmission control unit 530.

The first communication control unit 510 executes first communication control for controlling the first communication device 120. The first communication control controls the wide-area wireless communication on the supply device 5 side, and controls communication of the supply device 5 using the first communication device 120. That is, the first communication control controls communication of the management device 8 of the supply device 5. The first communication control controls communication between the supply device 5 and the network 40 and also controls communication between the supply device 5 and the server 30 via the network 40. The first communication control unit 510 is a supply equipment communication controller (SECC).

The second communication control unit 520 executes second communication control for controlling the second communication device 130. The second communication control controls the narrow-area wireless communication on the supply device 5 side, and controls communication of the supply device 5 using the second communication device 130. That is, the second communication control controls communication of the segment 7 of the supply device 5. The second communication control controls communication between the supply device 5 and the vehicle 3 as communication not via the network 40. The second communication control unit 520 is a primary device communication controller (PDCC).

The power transmission control unit 530 executes power transmission control for controlling the power transmission device 10. The power transmission control controls power for power transmission, and controls the power conversion unit 12 of the power transmission device 10. The power transmission control unit 530 executes power control for controlling the PFC circuit 210 and the inverter 220.

FIG. 5 is a block diagram illustrating a functional configuration of the vehicle ECU. The vehicle ECU 330 includes a third communication control unit 610, a fourth communication control unit 620, and a charge control unit 630.

The third communication control unit 610 executes third communication control for controlling the third communication device 340. The third communication control controls the wide-area wireless communication on the vehicle 3 side, and controls communication of the vehicle 3 using the third communication device 340. The third communication control controls communication between the vehicle 3 and the network 40 and also controls communication between the vehicle 3 and the server 30 via the network 40. The third communication control unit 610 is an EV communication controller (EVCC).

The fourth communication control unit 620 executes fourth communication control for controlling the fourth communication device 350. The fourth communication control controls the narrow-area wireless communication on the vehicle 3 side, and controls communication of the vehicle 3 using the fourth communication device 350. The fourth communication control controls communication between the vehicle 3 and the supply device 5 as communication not via the network 40. The fourth communication control unit 620 is a secondary device communication controller (SDCC).

The charge control unit 630 executes charge control for controlling the power reception device 20 and the charge relay 310. The charge control includes power control for controlling received power in the secondary device 22 and relay control for controlling a connection state between the secondary device 22 and the battery 320. The charge control unit 630 executes power control for controlling the rectifier circuit 430. The charge control unit 630 executes relay control for switching an open/close state of the charge relay 310.

In the wireless power transfer system 1 configured as described above, the wireless power transfer from the supply device 5 to the vehicle 3 is performed in a state in which the wireless communication is established between the vehicle 3 and the supply device 5. Power is transferred contactlessly from the primary coil 11 on the ground side to the secondary coil 21 on the vehicle side in a state in which the vehicle 3 and the supply device 5 are paired by the wireless communication. Then, in the vehicle 3, the charge control is performed to supply the power received by the secondary coil 21 to the battery 320.

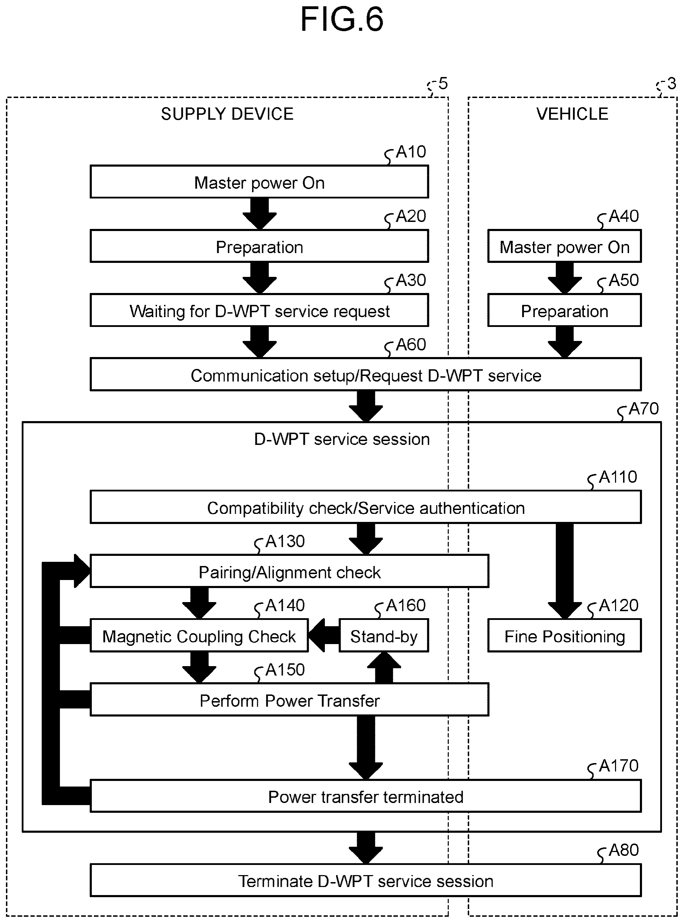

A power transfer process (D-WPT process) will be described with reference to FIG. 6. The power transfer process is a process structured as a chain of a plurality of activities and derived from states and corresponding transitions.

FIG. 6 is a diagram for describing the power transfer process. In FIG. 6, basic activities for describing the power transfer process are illustrated. A thick arrow in FIG. 6 represents a transition line. The state of the wireless power transfer system 1 in the power transfer process is represented by the activities that configure the power transfer process.

The activities that form the power transfer process include power transfer service session (D-WPT service session A70), which is an activity of a stage of performing the power transfer; an activity of a stage before performing the power transfer; and an activity of a stage after performing the power transfer. The activity can be described while separating an operation subject according to the presence or absence of communication between the supply device 5 and the vehicle 3. The activity is divided into a state of only the supply device 5 side without communication, a state of only the vehicle 3 side without communication, and a state of both the supply device 5 and the vehicle 3 with communication.

As illustrated in FIG. 6, the activity includes: master power on A10; preparation A20; waiting for D-WPT service request A30; master power on A40; preparation A50; communication setup/request D-WPT service A60; D-WPT service session A70; and terminate D-WPT service session A80.

Preparation A20 is a preparation state of the supply device 5. In preparation A20, the supply device 5 activates the circuit and confirms safety without communicating with the vehicle 3. In master power on A10, the supply device 5 transitions to a state of preparation A20. Then, in a case where the supply device 5 activates the circuit and can confirm safety in preparation A20, a state transitions to waiting for D-WPT service request A30. In contrast, in a case where there is a problem in the supply device 5, the supply device 5 notifies the vehicle 3 of information (unavailability notification) indicating that the wireless power transfer system 1 cannot be used by the wide-area wireless communication. The first communication device 120 transmits the unavailability notification to the vehicle 3.

Preparation A50 is a preparation state of the vehicle 3. In preparation A50, the vehicle 3 activates the circuit and confirms safety without communicating with the supply device 5. In master power on A40, the vehicle 3 transitions to a state of preparation A50. Then, in a case where the vehicle 3 activates the circuit and can confirm safety in preparation A50, a state transitions to communication setup/request D-WPT service A60. In contrast, in a case where there is a problem in the vehicle 3, the vehicle 3 does not start the wide-area wireless communication and does not perform a subsequent sequence in the D-WPT process.

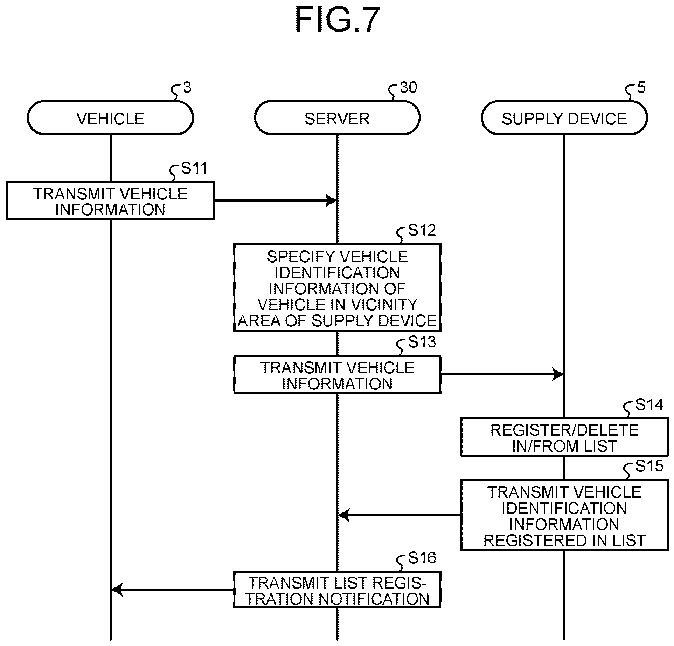

Communication setup/request D-WPT service A60 is started by the vehicle ECU 330. In communication setup/request D-WPT service A60, the vehicle ECU 330 starts the wide-area wireless communication. First, when the vehicle 3 transitions from preparation A50 to communication setup/request D-WPT service A60, the third communication device 340 transmits a request signal for the D-WPT service. The third communication device 340 performs wireless communication with the first communication device 120 corresponding to the D-WPT lane, which the vehicle 3 is scheduled to enter or has entered. The first communication device 120 to be communicated is selected on the basis of a relative positional relationship between a current position of the vehicle 3 and a position of the D-WPT lane. On the supply device 5 side, when the first communication device 120 receives the request signal for the D-WPT service in the state of waiting for D-WPT service request A30, the state transitions to communication setup/request D-WPT service A60. Various pieces of information of the wide-area wireless communication and P2PS communication are linked by using the vehicle identification information. A processing sequence of this communication setup/request D-WPT service A60 is illustrated in FIG. 7.

FIG. 7 is a sequence diagram illustrating a case where communication using the wide-area wireless communication is performed between the vehicle and the supply device. The vehicle 3 transmits the vehicle information to the server 30 (step S11). At step S11, the third communication device 340 of the vehicle 3 transmits the vehicle information to the server 30. The vehicle information includes the vehicle identification information, various parameters of the power reception device 20, current position information of the vehicle 3, and required power. The vehicle ECU 330 calculates the required power on the basis of a state of charge (SOC) of the battery 320. The calculated required power becomes the feed power request value. At step S11, the vehicle ECU 330 causes the third communication device 340 to transmit the vehicle information every predetermined time. The predetermined time is set according to a distance from the current position of the vehicle 3 to a start point of the WPT lane. The shorter the distance from the vehicle 3 to the start point of the WPT lane, the shorter an interval of the predetermined time.

When receiving the vehicle information from the vehicle 3, the server 30 specifies the vehicle identification information of the vehicle 3 located in a vicinity area of the supply device 5 on the basis of the current position information of the vehicle 3 included in the vehicle information (step S12). At step S12, the server 30 specifies the vehicle 3 located in a predetermined vicinity area from the supply device 5 on the basis of the current position information of the vehicle 3 and the position information of the supply device 5. The vicinity area is set to an area within 500 meters, for example.

Upon specifying the vehicle identification information of the vehicle 3, the server 30 transmits the vehicle information to the supply device 5 (step S13). At step S13, the transmission device of the server 30 transmits the vehicle information to the supply device 5.

Upon receiving the vehicle information from the server 30, the supply device 5 registers/deletes the vehicle identification information in/from an identification information list (step S14). At step S14, the power transmission ECU 110 registers and deletes the vehicle identification information in and from the identification information list in such a manner that the vehicle identification information associated with the vehicle information is registered in the identification information list without excess or deficiency.

After registering and deleting the vehicle identification information in and from the identification information list, the supply device 5 transmits the vehicle identification information registered in the identification information list to the server 30 (step S15). At step S15, the first communication device 120 of the supply device 5 transmits the vehicle identification information to the server 30.

Upon receiving the vehicle identification information from the supply device 5, the server 30 transmits a list registration notification to the vehicle 3 corresponding to the vehicle identification information registered in the identification information list (step S16). At step S16, the communication device of the server 30 transmits the list registration notification to the vehicle 3. The list registration notification is a notification indicating that the vehicle identification information is registered in the identification information list, and includes the identification information of the supply device 5 and the position information of the supply device 5.

In this manner, when the vehicle 3 starts the wide-area wireless communication and both the supply device 5 and the vehicle 3 are in the state of communication setup/request D-WPT service A60, the communication setup by the wide-area wireless communication is successful. With the successful communication setup, the state transitions to D-WPT service session A70.

It returns to FIG. 6. D-WPT service session A70 transfers power from the power transmission-side resonance circuit 240 of the supply device 5 to the power reception-side resonance circuit 410 of the vehicle 3 contactlessly in a state in which a communication connection is established between the supply device 5 and the vehicle 3. D-WPT service session A70 starts with successful communication setup and terminates with termination of the communication. In a state of D-WPT service session A70, when the communication is terminated, the state transitions to terminate D-WPT service session A80.

In terminate D-WPT service session A80, the vehicle 3 terminates the wide-area wireless communication with the supply device 5. The vehicle 3 and the supply device 5 can receive a trigger for terminating D-WPT service session A70. Then, the vehicle ECU 330 prevents the D-WPT from being started for the secondary device 22 and the vehicle 3 until the third communication device 340 receives a next notification (the request signal for D-WPT service).

Detailed activities of D-WPT service session A70 will be described.

D-WPT service session A70 includes compatibility check/service authentication A110, fine positioning A120, pairing/alignment check A130, magnetic coupling check A140, perform power transfer A150, stand-by A160, and power transfer terminated A170.

Compatibility check/service authentication A110 will be described. After successful communication setup, the vehicle ECU 330 and the power transmission ECU 110 confirm that the primary device 13 and the secondary device 22 are compatible. The compatibility check is performed on the supply device 5 side on the basis of information associated with the vehicle identification information acquired by communication. Check items include a minimum ground level of the secondary device 22, a shape type of the power reception-side resonance circuit 410, a circuit topology of the secondary device 22, a self-resonance frequency of the secondary device 22, the number of secondary coils 21 and the like.

In compatibility check/service authentication A110, first, the vehicle 3 transmits compatibility information of the power reception device 20 from the third communication device 340 to the supply device 5. The compatibility information of the power reception device 20 is transmitted by the wide-area wireless communication. The first communication device 120 of the supply device 5 receives the compatibility information of the power reception device 20 from the vehicle 3. Then, the first communication device 120 of the supply device 5 transmits the compatibility information of the power transmission device 10 to the vehicle 3. The compatibility information of the power transmission device 10 is transmitted by the wide-area wireless communication. The third communication device 340 of the vehicle 3 receives the compatibility information of the power transmission device 10 from the supply device 5. These pieces of compatibility information can be transmitted and received between the vehicle 3 and the supply device 5 by the wide-area wireless communication via the network 40 and the server 30.

Elements of the compatibility information transmitted by the vehicle 3 to the supply device 5 include the vehicle identification information, WPT power classes, air gap class, WPT operating frequencies, WPT frequency adjustment, WPT type, WPT circuit topology, fine positioning method, pairing method, alignment method, power adjustment function presence/absence information and the like.

Elements of the compatibility information transmitted by the supply device 5 to the vehicle 3 include supply device identification information, WPT power classes, air gap class, WPT operating frequencies, WPT frequency adjustment, WPT type, WPT circuit topology, fine positioning method, pairing method, alignment method, power adjustment function presence/absence information and the like.

Each element name will be described in detail. Each element of the compatibility information transmitted from the vehicle 3 to the supply device 5 will be described, and the description of the compatibility information transmitted from the supply device 5 to the vehicle 3 overlapping with the compatibility information transmitted from the vehicle 3 to the supply device 5 will be omitted.

Air gap class is information indicating an air gap class that the secondary device 22 can receive. WPT power classes is information indicating a power class that the secondary device 22 can receive. WPT operating frequencies is information indicating a frequency of received power received by the secondary device 22. WPT frequency adjustment is information indicating whether the driving frequency can be adjusted. The WPT type is information indicating a shape type of the power reception-side resonance circuit 410, and indicates a coil shape of the secondary coil 21. Examples of the WTP type include a circle and a solenoid. WPT circuit topology is information indicating a connection structure between the secondary coil 21 and the resonance capacitor. WTP circuit topology includes serial and parallel. Fine positioning method is information indicating how to perform positioning when performing positioning. Pairing method is a method in which the vehicle 3 performs pairing for specifying the supply device 5. Alignment method indicates a method of relatively confirming positions of the secondary device 22 and the primary device 13 before starting the power transmission.

Fine positioning A120 will be described. The vehicle 3 performs fine positioning A120 prior to pairing/alignment check A130 or in parallel with the activities. When determining that the vehicle 3 approaches or enters an area (WPT lane) where the supply device 5 is installed, the vehicle ECU 330 starts fine positioning A120.

The vehicle ECU 330 guides the vehicle 3 to perform positioning of the primary device 13 and the secondary device 22 within a range in which sufficient magnetic coupling is established for wireless power transfer.

Fine positioning A120 is basically performed manually or automatically on the vehicle 3 side. Fine positioning A120 can cooperate with an automated driving assistance system (ADAS).

The activity of fine positioning A120 continues until the vehicle 3 leaves the D-WPT charging site or the state changes to communication termination, and can be executed on the basis of positioning information transmitted from the supply device 5 to the vehicle 3 via the wide-area wireless communication. This communication termination is terminate D-WPT service session A80.

Pairing/alignment check A130 will be described. Here, pairing and alignment check will be separately described.

Pairing is described. A P2PS interface that performs the narrow-area wireless communication ensures that the primary device 13 and the secondary device 22 are uniquely paired. A process of the pairing state is as follows:

The vehicle ECU 330 recognizes that the vehicle 3 approaches or enters the D-WPT lane. For example, the vehicle ECU 330 includes map information including the D-WPT lane, compares the same with position information of a host vehicle obtained by the GPS receiver 360, and recognizes approach or entry with a linear distance or the like. The D-WPT lane to which the vehicle 3 approaches is transmitted to the server 30 by the wide-area wireless communication. In short, the third communication device 340 notifies a cloud of a signal indicating that the vehicle 3 approaches to any D-WPT lane. Furthermore, in a case where the vehicle ECU 330 recognizes the approach or entry of the vehicle 3 to the D-WPT lane, the fourth communication device 350 starts transmitting modulated signals at regular intervals for pairing between the primary device 13 and the secondary device 22.

The supply device 5 may recognize that the vehicle 3 approaches or enters the D-WPT lane using information acquired from the server 30 by the wide-area wireless communication. The server 30 allocates the vehicle identification information of the vehicle 3 approaching in each D-WPT lane to the supply device 5 corresponding to the lane. Since the supply device 5 only needs to refer to the vehicle identification information the number of which is reduced by the server 30, authentication processing can be performed in a short time. In a case where the supply device 5 recognizes that the vehicle 3 approaches the D-WPT lane, the second communication device 130 enters a stand-by mode. In the stand-by mode, it stands by for reception of the modulated signal from the fourth communication device 350 of the vehicle 3. The modulated signal includes the vehicle identification information.

When the second communication device 130 receives the modulated signal from the vehicle 3, the supply device 5 compares the vehicle identification information received by the narrow-area wireless communication with the vehicle identification information in the identification information list obtained as a result of the wide-area wireless communication with a plurality of vehicles 3 heading for the D-WPT lane. By this comparison, the supply device 5 identifies the vehicle 3.

When recognizing that the vehicle 3 is outside the D-WPT lane, the vehicle ECU 330 stops transmitting the modulated signal from the fourth communication device 350. The vehicle ECU 330 can determine whether the vehicle has passed through the D-WPT lane on the basis of the map information and the position information of the host vehicle.

In a case where the supply device 5 determines that the vehicle 3 does not travel in the D-WPT lane or determines that the vehicle 3 does not approach the D-WPT lane, this stops stand-by for the modulated signal from the fourth communication device 350.

Pairing is executed on the primary device 13 until the vehicle 3 leaves the D-WPT charging site or the state changes to communication termination. When pairing is completed, the state transitions to alignment check.

Alignment check will be described. Alignment check is intended to ensure that the distance in the lateral direction between the primary device 13 and the secondary device 22 is within an acceptable range. Alignment check is performed by using the narrow-area wireless communication (P2PS).

Alignment check is continuously executed on the basis of the P2PS until the vehicle 3 leaves the D-WPT charging site or the state changes to communication termination. A result of alignment check can be transmitted from the first communication device 120 to the third communication device 340 by the wide-area wireless communication.

Magnetic coupling check A140 will be described. In magnetic coupling check A140, the supply device 5 confirms a magnetic coupling state and confirms that the secondary device 22 is within an acceptable range. When magnetic coupling check A140 terminates, the state transitions to perform power transfer A150.

Perform power transfer A150 will be described. In this state, the supply device 5 performs power transfer to the power reception device 20. The power transmission device 10 and the power reception device 20 need to have capability of controlling transfer power (transmitted power and received power) for usefulness of MF-D-WPT and protection of the power reception device 20 and the battery 320. The larger power transfer helps to lengthen a travel distance without static wireless charging and conductive charging of the power reception device 20. However, a capacity of the battery 320 varies depending on a type of the vehicle 3, and driving power demand might fluctuate drastically. Examples of this drastic fluctuation include sudden regenerative brake. In a case where the regenerative brake is performed while the vehicle is traveling in the D-WPT lane, the regenerative brake is prioritized, so that the received power from the power reception device 20 is supplied to the battery 320 in addition to regenerative power. In this case, it is necessary to adjust the transfer power by the power reception device 20 in order to protect the battery 320 from overcharge.

In this state, communication is not newly started between the supply device 5 and the power reception device 20 despite the necessity of power control. This is because the communication might lose response and accuracy in the power control due to its instability and latency. Therefore, the supply device 5 and the power reception device 20 perform the power transfer and control thereof on the basis of known information up to this state.

The supply device 5 increases the transfer power of the magnetic coupling check in response to the power request transmitted from the third communication device 340 in advance using the wide-area wireless communication. The supply device 5 keeps a fluctuation in current and voltage within its range and attempts to maximize the power transferred during the transition.

The power reception device 20 basically receives the transmitted power from the power transmission device 10 without any control. However, the power reception device 20 starts control in a case where the transmitted power such as rated power of the battery 320 that fluctuates according to a state of charge or the driving power demand of the vehicle 3 exceeds or is about to exceed a limit. The power control in the vehicle ECU 330 is also required to cope with malfunction in the wide-area wireless communication. This malfunction leads to a contradiction between a power control target in the primary device 13 and the request from the third communication device 340, and a sudden failure of the power reception device 20 and the battery 320 during the power transfer. The power reception device 20 controls the power transferred under a power request rate notified by the first communication device 120.

The power request is determined on the basis of compatibility check information such as WPT circuit topology, geometry, ground clearance, electromagnetic compatibility (EMC) of the vehicle 3 and the primary device 13. The magnetic field varies depending on these specifications, and it is necessary to transfer power within a range satisfying the EMC.

The power control in the power transmission ECU 110 and the power reception device 20 may interfere with each other. In particular, there is a possibility of interference in a case where the supply device 5 attempts to implement the power request larger than the latest power limit in the power reception device 20 by the wide-area wireless communication. An example of this includes drastic regenerative control with a relatively small battery 320 in the vehicle 3. If possible, it is desirable that the supply device 5 can detect a mismatch between a power supply control target and the limit and adjust the power transfer in order to eliminate the mismatch.

When the power transfer is interrupted for a short period while the secondary device 22 is still on the primary device 13, for example, in a case where a foreign object on the primary device 13 is detected by the foreign object detection device 140, or a coupling coefficient of the magnetic coupling becomes low due to misalignment of the secondary device 22, the state transitions to stand-by A160. In a case where the foreign object detection device is provided in the vehicle 3, the foreign object may be detected on the vehicle 3 side.

When the secondary device 22 passes over the primary device 13, the state transitions to power transfer terminated A170. In this case, since the magnetic coupling between the two devices is weakened, the transferred power is reduced. Since the supply device 5 can detect that the magnetic coupling is weakened by monitoring the transferred power, the supply device 5 basically determines the state transition to power transfer terminated A170 and then starts lowering the voltage to stop the power transfer.

Stand-by A160 will be described. In this state, the power transfer is interrupted for a short time for some reason, and when both the vehicle 3 and the supply device 5 are ready for the D-WPT, the state returns to perform power transfer A150. In a case where there is a possibility of interrupting the power transfer, the state becomes stand-by A160.

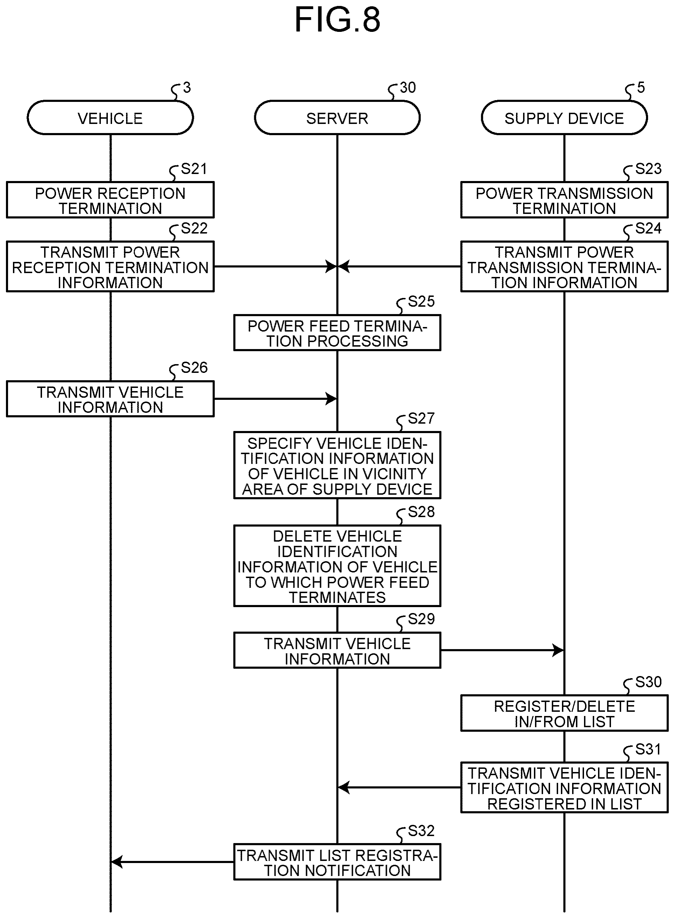

Power transfer terminated A170 will be described. In this state, the supply device 5 reduces the transferred power to zero, and holds or uploads power transfer result data such as total transferred power, power transfer efficiency, and failure history. Each piece of data is tagged with the vehicle identification information. Finally, the supply device 5 deletes the vehicle identification information of the vehicle 3 that has passed through the D-WPT lane. Accordingly, the supply device 5 can prepare for the pairing and power transfer to be performed on another vehicle thereafter. A processing sequence of power transfer terminated A170 is illustrated in FIG. 8.

FIG. 8 is a sequence diagram illustrating an operation after power feed from the supply device to the vehicle during traveling is terminated. When the power reception from the supply device 5 terminates in the power reception device 20 of the vehicle 3 (step S21), the vehicle 3 transmits power reception termination information to the server 30 (step S22). At step S22, the power reception termination information is transmitted from the third communication device 340 of the vehicle 3. The power reception termination information includes, for example, the vehicle identification information of the vehicle 3, received power from the supply device 5, power reception efficiency, and an abnormality detection result as information regarding power reception from the supply device 5.

When the processing at step S21 is performed, the supply device 5 terminates the power transmission to the vehicle 3 (step S23). The processing at step S21 and the processing at step S23 may be performed simultaneously but is not required to be performed simultaneously. When the processing at step S23 is performed, the supply device 5 transmits power transmission termination information to the server 30 (step S24). At step S24, the power transmission termination information is transmitted from the first communication device 120 of the supply device 5.

When receiving the power reception termination information from the vehicle 3 and receiving the power transmission termination information from the supply device 5, the server 30 performs power feed termination processing of terminating the power feed from the supply device 5 to the vehicle 3 (step S25). In the power feed termination processing, processing of calculating a supply power amount from the supply device 5 to the vehicle 3 and processing of charging a user of the vehicle 3 on the basis of the calculated supply power amount are performed on the basis of the power reception termination information and the power transmission termination information.

The vehicle 3 transmits the vehicle information to the server 30 irrespective of the power feed termination processing (step S26). At step S26, the vehicle information is transmitted from the third communication device 340 of the vehicle 3.

When receiving the vehicle information from the vehicle 3 after performing the power feed termination processing, the server 30 specifies the vehicle identification information of the vehicle 3 located in the vicinity area of each supply device 5 on the basis of the vehicle information (step S27).

When the power feed termination processing to a certain vehicle 3 has already been performed in a certain supply device 5, the server 30 deletes the vehicle identification information of the vehicle 3 for which the power feed termination processing has already been performed from the vehicle identification information of the vehicle 3 in the vicinity area of the supply device 5 specified in the processing at step S27 (step S28).

The server 30 transmits, to each of the supply devices 5, the vehicle information associated with the vehicle identification information that is not deleted in the processing at step S28 out of the vehicle identification information of the vehicle 3 specified as being located in the vicinity area of each supply device 5 (step S29).

After the vehicle information is transmitted to each supply device 5 in the processing at step S29, when the supply device 5 receives the vehicle information from the server 30, the supply device 5 registers and deletes the vehicle identification information in and from the identification information list (step S30). The processing at step S30 is similar to the processing at step S14 in FIG. 7. Thereafter, the supply device 5 transmits the vehicle identification information registered in the identification information list to the server 30 (step S31). The processing at step S31 is similar to the processing at step S15 in FIG. 7.

Upon receiving the vehicle identification information from the supply device 5, the server 30 transmits a list registration notification to the vehicle 3 corresponding to the vehicle identification information registered in the identification information list (step S32). The processing at step S32 is similar to the processing at step S16 in FIG. 7.

As a result, in a case where the processing illustrated in FIG. 8 is performed, the vehicle identification information is registered in the identification information list for the vehicle 3 located in the vicinity area of each supply device 5, to which the power feed from the supply device 5 is not terminated, and of which a delete request for the vehicle identification information is not made. Then, in a case where the vehicle identification information of the vehicle 3 is registered in the identification information list of any supply device 5, the vehicle 3 receives the list registration notification. Therefore, the vehicle ECU 330 can determine that the host vehicle is registered in any supply device 5 by receiving the list registration notification. Then, in a case where the vehicle 3 leaves the vicinity area of the supply device 5, the vehicle identification information of the vehicle 3 is deleted from the identification information list of the supply device 5.

It returns to FIG. 6. In power transfer terminated A170, the power reception device 20 does not need to do anything to make the transfer power 0. The P2PS interface is kept active when the vehicle 3 is in the D-WPT lane and the state of the power reception device 20 automatically transitions to pairing for power transfer from the next primary device 13. As indicated by a transition line illustrated in FIG. 6, the state transitions from power transfer terminated A170 to pairing/alignment check A130. As illustrated in FIG. 6, when a predetermined transition condition is satisfied, it is possible to transition from magnetic coupling check A140 to pairing/alignment check A130 and transition from perform power transmission A150 to pairing/alignment check A130. The pairing may be individually performed on a plurality of primary coils 11, or at a representative point of the plurality of bundled primary coils 11.

In a case where there is no D-WPT request from the vehicle ECU 330 or a series of states from communication setup/request D-WPT service A60 to power transfer terminated A170 is prohibited, D-WPT service session A70 transitions to terminate D-WPT service session A80 and stops the wide-area wireless communication between the first communication device 120 and the third communication device 340. For example, the D-WPT stops when the state of charge in the battery 320 is too high or when the power reception device 20 is too hot for continuous power transfer. Such unnecessary D-WPT can be disabled simply by deactivating the P2PS interface. However, by stopping the wide-area wireless communication, the power transmission ECU 110 can release the memory occupied for the vehicle 3 without requiring the D-WPT by terminating the established wide-area wireless communication.

D-WPT service session A70 is not limited to the transition indicated by the transition line illustrated in FIG. 6. When activities after pairing/alignment check A130 are terminated in D-WPT service session A70, in a case where a condition that the power transfer process stays in D-WPT service session A70 is satisfied, transition is made not to terminate D-WPT service session A80, but to compatibility check/service authentication A110. For example, in a case where a predetermined transition condition is satisfied in the state of magnetic coupling check A140, the state can transition to compatibility check/service authentication A110. The transition of each activity in D-WPT service session A70 is controlled by the control device of the wireless power transfer system 1. The control device of the wireless power transfer system 1 includes the power transmission ECU 110 and the vehicle ECU 330. The power transmission ECU 110 has a function as a control device of the supply device 5. The vehicle ECU 330 has a function as a control device of the power reception device 20.

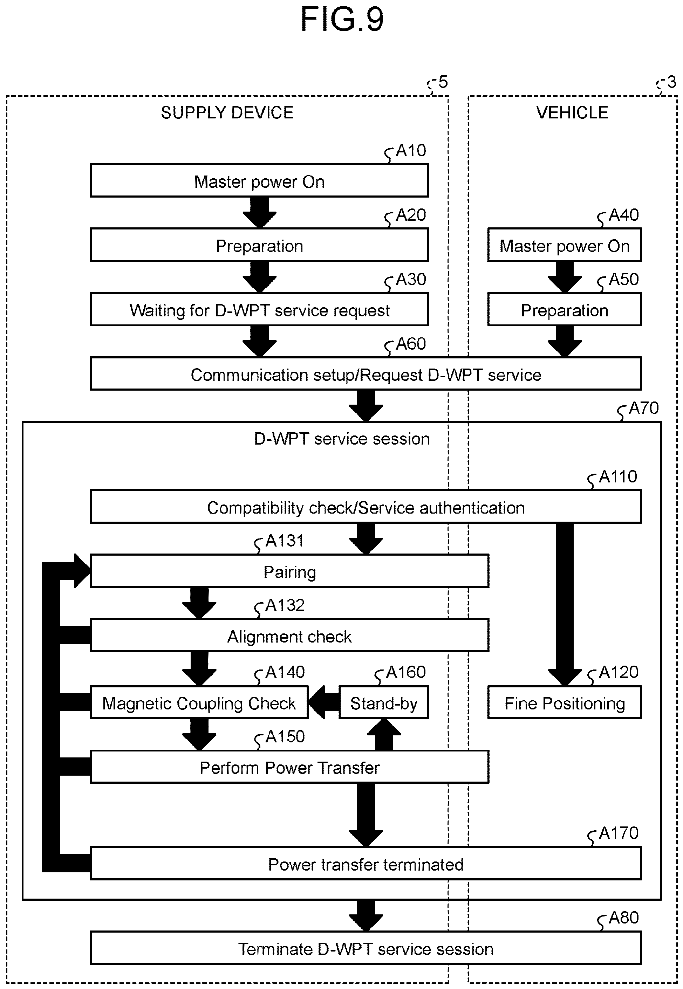

FIG. 9 is a diagram illustrating an example of the power transfer process. In D-WPT service session A70 illustrated in FIG. 9, pairing /alignment check A130 illustrated in FIG. 6 is subdivided into pairing A131 and alignment check A132.

In D-WPT service session A70 illustrated in FIG. 9, when compatibility check/service authentication A110 is completed, the state transitions to pairing A131. In pairing A131, the process in the pairing state described above is performed. When pairing A131 is completed, the state transitions to alignment check A132.

In alignment check A132, it is confirmed that the distance in the lateral direction between the primary device 13 and the secondary device 22 is within an acceptable range. The supply device 5 on the ground side detects the lateral position of the vehicle 3 by using information acquired by the narrow-area wireless communication between the traveling vehicle 3 and the segment 7 on the road 4. In alignment check A132, it is determined whether an amount of lateral positional displacement of the vehicle 3 with respect to the primary coil 11 is an allowable value. In a case where it is confirmed that the positional displacement amount falls within the allowable value, alignment check A132 is completed. When alignment check A132 is completed, the state transitions to magnetic coupling check A140. Then, when magnetic coupling check A140 is completed, the state transitions to perform power transfer A150.

In D-WPT service session A70, it is possible to transition from the state of alignment check A132 to pairing A131. For example, by terminating D-WPT service session A70 currently being executed and starting D-WPT service session A70 again in the state of alignment check A132, alignment check A132 is terminated and the state transitions to compatibility check/service authentication A110 as a result. Alternatively, with a transition line not illustrated in FIG. 9, the state of alignment check A132 transitions to pairing A131 without terminating D-WPT service session A70 currently being executed. Furthermore, it is also possible to transition from the state of alignment check A132 to compatibility check/service authentication A110.

Specifically, the control device of the wireless power transfer system 1 determines whether the amount of lateral positional displacement of the traveling vehicle 3 is equal to or smaller than the allowable value in alignment check A132. The allowable value is set to about 10 to 20 cm. For example, in a case where the allowable value is set to 20 cm, the control device can determine that the lateral position of the vehicle 3 is included in the allowable range when determining that the amount of lateral positional displacement of the vehicle 3 is 20 cm or smaller. In contrast, when determining that the amount of lateral positional displacement of the vehicle 3 exceeds 20 cm, the control device can determine that the lateral position of the vehicle 3 is outside the allowable range.

The amount of lateral positional displacement includes a case where the vehicle 3 is displaced rightward from a reference position and a case where the vehicle 3 is displaced leftward from the reference position. In the first place, in a case where the position of the vehicle 3 greatly displaces in the lateral direction, it is assumed that the supply device 5 on the ground side cannot detect the amount of lateral positional displacement of the traveling vehicle 3. That is, a case where the amount of lateral positional displacement of the vehicle 3 exceeds the allowable value includes a case where the position is displaced to such an extent that the amount of positional displacement can be detected and a case where the position is displaced significantly to such an extent that the amount of positional displacement cannot be detected. For example, in a state in which the vehicle 3 is displaced in the lateral direction from the reference position by 30 cm or more, the supply device 5 on the ground side cannot detect the amount of lateral positional displacement of the vehicle 3. Therefore, in alignment check A132, it is determined whether the amount of lateral positional displacement of the vehicle 3 can be detected, and in a case where the amount of positional displacement can be detected, the amount of positional displacement is compared with the allowable value. This makes it possible to accurately determine the lateral positional displacement of the vehicle 3.

In order to accurately determine the lateral positional displacement of the vehicle 3 in this manner, it is necessary to perform the above-described processing in alignment check A132. Moreover, in the control on the ground side using the narrow-area wireless communication, pairing A131 can be performed by one reception antenna, whereas alignment check A132 is performed on the basis of a radio wave intensity difference among a plurality of reception antennas. Therefore, the control device sets the time of alignment check A132 to be longer than the time of pairing A131 in order to accurately determine the lateral positional displacement of the vehicle 3. The time of alignment check A132 is the time (limit time) from the start of alignment check A132 to determination of completion. The time of pairing A131 is the time (limit time) from the start of pairing A131 to determination of completion.

The control device maintains the state of alignment check A132 until an elapsed time from the start of alignment check A132 exceeds a preset limit time even if the state in which the amount of lateral positional displacement of the vehicle 3 cannot be detected continues in alignment check A132. As a result, when the lateral positional displacement of the vehicle 3 is eliminated, the wireless power transfer can be performed immediately.

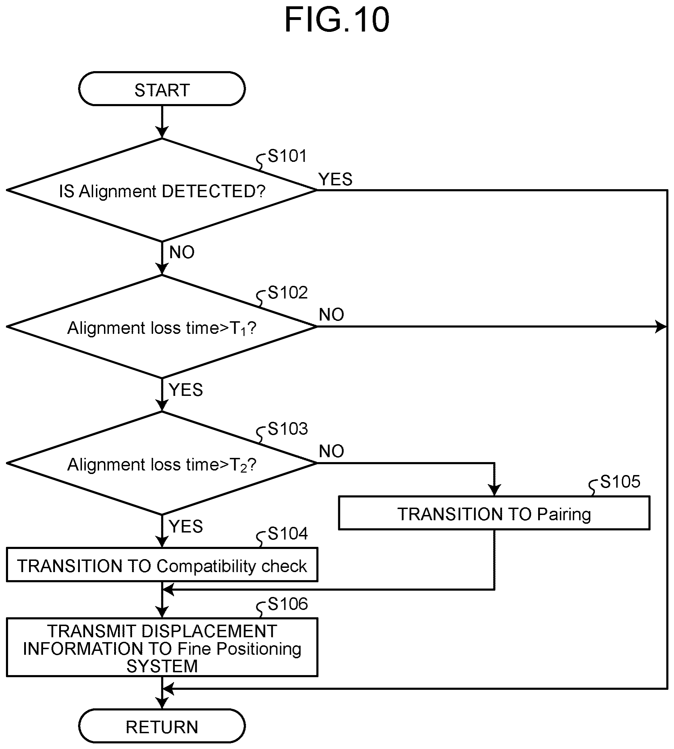

FIG. 10 is a flowchart illustrating control during alignment check. The control illustrated in FIG. 10 is repeatedly executed by the control device of the wireless power transfer system 1.

The control device determines whether it is alignment loss during alignment check A132 (step S101). Alignment loss refers to a state in which the amount of lateral positional displacement of the vehicle 3 cannot be detected. A time in which alignment cannot be detected is defined as an alignment loss time. Alignment loss includes a case where the lateral position of the vehicle 3 cannot be specified. The time for detecting alignment is longer than the time for detecting pairing.

At step S101, it is determined whether the supply device 5 on the ground side cannot detect the amount of lateral positional displacement of the traveling vehicle 3 in the transmission and reception of signals between the supply device 5 on the ground side and the vehicle 3 side by the narrow-area wireless communication. At step S101, the supply device 5 determines whether the position of the vehicle 3 is greatly displaced in the lateral direction to such an extent that the amount of lateral positional displacement of the vehicle 3 with respect to the primary coil 11 of the road 4 cannot be detected.

In a case where it is determined that it is not alignment loss (step S101: Yes), this control routine is terminated. In this case, the state does not transition and remains in the state of alignment check A132. The traveling position is not corrected while the state of alignment check A132 remains due to affirmative determination at step S101. In a case of determining in alignment check A132 that it is not alignment loss, the control device does not correct the traveling position in the vehicle 3.

In a case where it is determined that it is alignment loss (step S101: No), the control device determines whether the time in the state of alignment loss is longer than a first predetermined time T1 (step S102). At step S102, an elapsed time in which the state of alignment loss continues from a time point at which it is determined as alignment loss is compared with the first predetermined time T1, and it is determined whether the elapsed time exceeds the first predetermined time T1.

In a case where it is determined that the time of the state of alignment loss is equal to or shorter than the first predetermined time T1 (step S102: No), this control routine is terminated. In this case, the state does not transition and remains in the state of alignment check A132. A case where the time in the state of alignment loss is equal to or shorter than the first predetermined time T1 is a normal case including a communication delay. The traveling position is not corrected while the state of alignment check A132 remains due to negative determination at step S102. In a case where it is determined in alignment check A132 that it is alignment loss but the elapsed time is equal to or shorter than the first predetermined time T1, the control device does not correct the traveling position in the vehicle 3.

In a case where it is determined that the time of the state of alignment loss is longer than the first predetermined time T1 (step S102: Yes), the control device determines whether the time in the state of alignment loss is longer than a second predetermined time T2 (step S103). The second predetermined time T2 is set to a value larger than the first predetermined time T1. At step S103, an elapsed time in which the state of alignment loss continues from a time point at which it is determined as alignment loss is compared with the second predetermined time T2, and it is determined whether the elapsed time exceeds the second predetermined time T2.

In a case where it is determined that the time of the state of alignment loss is longer than the second predetermined time T2 (step S103: Yes), the control device causes the state to transition to compatibility check (step S104). A case where the time in the state of alignment loss is longer than the second predetermined time T2 is a case where the positional displacement cannot be eliminated as is. At step S104, D-WPT service session A70 currently being executed is terminated, and D-WPT service session A70 is started again. At step S104, alignment check A132 is terminated and the state transitions to compatibility check/service authentication A110. As described above, even in a case of determining that it is alignment loss in alignment check A132, the control device remains in the state of alignment check A132 until the second predetermined time T2 elapses. That is, the control device does not allow immediate transition from alignment check A132 to another state at the time when it is determined as alignment loss. Then, in a case where the elapsed time exceeds the second predetermined time T2, the control device determines that confirmation is necessary from the compatibility check, temporarily terminates current D-WPT service session A70, and resumes D-WPT service session A70. At step S104, D-WPT service session A70 currently being executed is not necessarily terminated. At step S104, it is possible to transition from the state of alignment check A132 to pairing A131 without terminating D-WPT service session A70 currently being executed.

In a case where it is determined that the time of the state of alignment loss is not longer than the second predetermined time T2 (step S103: No), the control device causes the state to transition to pairing A131 (step S105). A case where the time in the state of alignment loss is longer than the first predetermined time T1 and equal to or shorter than the second predetermined time T2 is a case where the state immediately returns to the normal state, or a case where it takes time until it is determined that the state returns to the normal state due to a communication delay although the state immediately returns to the normal state. At step S105, in a case where the state of alignment loss continues longer than the first predetermined time T1 and does not exceed the second predetermined time T2, the alignment check A132 is terminated and the state transitions to pairing A131. In short, in a case where the time in the state of alignment loss exceeds the first predetermined time T1, it is not possible to stay in alignment check A132, and it is necessary to cause the state to transition.

When the processing at steps S104 and S105 is performed, the control device transmits positional displacement information to a fine positioning system (step S106). The positional displacement information includes information indicating that alignment loss occurs. The fine positioning system includes a control unit that performs fine positioning A120. In fine positioning A120, positioning is performed using the received positional displacement information. Alternatively, in fine positioning A120, a positioning function is corrected using the received positional displacement information. In short, the positional displacement is corrected. When processing at step S106 is performed, this control routine is terminated.

As described above, according to the embodiment, it is possible to determine whether it is alignment loss in alignment check A132 and to determine whether there is a state transition on the basis of the time of the state of alignment loss. This makes it possible to accurately determine the lateral positional displacement of the vehicle 3 in the supply device 5 on the ground side.

The allowable value to be compared with the amount of lateral positional displacement is not limited to about 10 to 20 cm. The allowable value may be set to about 10 cm.

### Industrial Applicability

According to the present invention, it is possible to provide a wireless power transfer system capable of accurately determining lateral positional displacement of a vehicle in a supply device on a ground side.

### Reference Signs List

- 1: WIRELESS POWER TRANSFER SYSTEM
- 2: SUPPLY FACILITY
- 3: VEHICLE
- 4: ROAD
- 5: SUPPLY DEVICE
- 6: AC POWER SUPPLY
- 7: SEGMENT
- 8: MANAGEMENT DEVICE
- 10: POWER TRANSMISSION DEVICE
- 11: PRIMARY COIL
- 13: PRIMARY DEVICE
- 20: POWER RECEPTION DEVICE
- 21: SECONDARY COIL
- 22: SECONDARY DEVICE
- 110: POWER TRANSMISSION ECU
- 330: VEHICLE ECU
- 240: POWER TRANSMISSION-SIDE RESONANCE CIRCUIT
- 410: POWER RECEPTION-SIDE RESONANCE CIRCUIT
- 530: POWER TRANSMISSION CONTROL UNIT

## Claims

1. A wireless power transfer system that performs wireless power transfer by magnetic coupling between a supply device on a ground side and a vehicle in motion, the wireless power transfer system comprising:
a control device that controls the wireless power transfer from a power transmission unit of the supply device to a power reception unit of the vehicle, wherein
the control device sets a time of Alignment check to be longer than a time of Pairing.

2. The wireless power transfer system according to claim 1, wherein
the control device
determines that it is Alignment loss in a case of determining that the vehicle is displaced in a lateral direction to such an extent that an amount of lateral positional displacement of the vehicle cannot be detected, and
remains in a state of Alignment check when determining that it is the Alignment loss and an elapsed time is equal to or shorter than a first predetermined time.

3. The wireless power transfer system according to claim 2, wherein
the control device
transits, in a case of determining that a time of a state of the Alignment loss exceeds the first predetermined time, a state from the Alignment check to the Pairing, and
transits, in a case of determining that the time of the state of the Alignment loss exceeds a second predetermined time which is longer than the first predetermined time, the state from the Alignment check to Compatibility check.

4. The wireless power transfer system according to claim 2 or 3, wherein
the control device does not correct a traveling position while remaining in the state of the Alignment check.

5. The wireless power transfer system according to claim 4, wherein
the control device transmits, in a case where the time of the state of the Alignment loss exceeds the first predetermined time, information indicating that the positional displacement of the vehicle occurs to a control unit that performs Fine positioning, and
the control unit that performs the Fine positioning corrects the positional displacement of the vehicle.
